# EUROPEAN PATENT SPECIFICATION

(11) **EP 2 220 872 B1**
(45) Date of publication and mention of the grant of the patent: **03.01.2018**
(21) Application number: 08857333.2
(22) Date of filing: 24.11.2008
(51) Int. Cl.: H04Q 3/00, H04Q 3/66, H04W 40/12

(54) **GSM TRAFFIC MANAGEMENT METHOD AND SYSTEM**
GSM-VERKEHRSVERWALTUNGSVERFAHREN UND SYSTEM
PROCÉDÉ ET SYSTÈME DE GESTION DE TRAFIC GSM

(30) Priority: 07.12.2007 TR 200708505
(43) Date of publication of application: 25.08.2010
(73) Proprietor: Turkcell Teknoloji Arastirma & Gelistirme Anonim Sirketi, 41470 Kocaeli (TR)
(72) Inventor: KARAKOÇ, Ulas, 41470 Kocaeli (TR); ÖZKAN, Ismail, 41470 Kocaeli (TR)
(74) Representative: Carangelo, Pierluigi
(86) International application number: PCT/IB2008/054925
(87) International publication number: WO 2009/072028

(56) References cited:
- EP-A- 0 898 430
- WO-A-97/05749
- US-A- 5 311 585
- US-A- 5 903 638
- US-B2- 6 748 064

## Description

### Technical Field

This invention relates to routing of the international calls made by the GSM networks to the operators serving as long distance carriers according to the criteria determined by the operator.

### Prior Art

There are tens of switches within the networks of GSM operators. As the subscribers can call any international destination from any switch in GSM Network of the operator , data about all foreign operators are entered into all those switches. When a subscriber wants to call another subscriber abroad, firstly call is routed to the switches, then routed to operators serving as long distance carrier through this switches. Occupancy rate of the switch used during this transaction and state of the selected operator giving long distance carrier service determine the quality and speed of the international call.

These transactions are standards called "Signaling System No. 7" and identified by International Telecommunication Union (ITU). This standard determines the communication between network components in the telecommunication network and the network used by this standard is called SS7 network.

The long distance carriers carrying calls to abroad are sometimes faced with problems or deterioration in voice quality during calls to a certain country over a carrier is sometimes observed. In such cases, call traffic should be shifted rapidly to the other carriers. However, to prepare and apply the data performing said shift for each switch takes time, causes income loss and customer dissatisfaction.

Long distance carriers associated with the switched in the regions are different. For example, switches in the Marmara region have connection with all carriers, while the switches in the Aegean region may have connection with less carrier operator, which makes the call management made for each region and switch more complicate.

Switches provide a limited flexibility in long distance carrier selection while routing international call traffic. However, international charging of customers varies according to countries. GSM operators require to route calls to these carriers inversely proportional to prices for each foreign country/operator called, which makes traffic management difficult in the networks including tens of switches, increases error rate. In addition, long distance connection costs for operator increases because carrier is not selected flexibly.

In US6748064, a prior art document, a system used for international calls was provided. System completely relates to long distance carrier operators. Operator selects the line used by the calling party based on conditions of operator. This system is directly aimed at subscribers, and subscriber is required to subscribe to this service and to enter his/her long distance carrier preferences. This system which does not allow an operator to manage international call traffic gives service based on the configuration of the subscriber, and traffic allocation and voice quality are not criteria for selection of long distance carrier. System offers subscriber least cost routing of long distance calls. In the system, alternatives to the carrier operators are not determined, and if there is not any available resource in the selected long distance carrier, state of call is undetermined.

In US5903638, a prior art document, a system used for international calls was provided. In this system, operator determines international line used by the calling party according to conditions, and adjusts switch density according to international and domestic calls. According to this solution, when the selected long distance carrier do not have any available telephone line, the query is made again between switch and platform, which increases call establishing time and occupancy time of telecommunication network resources. In this system, regional allocation for voice traffic sent to the carriers is not performed during selection of long distance carrier. In this case, traffic cannot be routed in determined rate for all long distance carriers with which operator have made agreement, and availability of the long distance carrier to be selected is not taken into consideration for the region in which call is made.

In US2005271198**,** another prior art document, a system used for international calls was provided. System determines international call routes according to circumstances, and selects line to be used by the calling party according to the conditions. Working principle of the system is to make routing according to preferences predetermined by the subscriber. GSM subscriber reduces cost of receiving call abroad via entering his/her preferences about the carriers from which he/she receives calls abroad in a database. System cannot make an optimization according to the current network occupancy of the operator.
In KR20040074447**,** another prior art document, a system used for international calls was provided. In general, system is used to enable subscribers to route the incoming calls in different ways according to criteria determined by themselves rather than routing international traffic of operator. EP 0898430 A1 discloses a communications control system for routing communications from and/or to a subscriber connected to communications switching means in an originating carrier via at least one other communications carrier selected from a plurality of possible communications carriers.

### Brief description of invention

An object of the invention is to control the international calls from a single point, to route call traffic in all switches by entering data into the platform and according to new data upon the user approval.

Another object of the invention is to provide a platform in which operator can determine percentage of how much traffic allocation can be sent through which carrier for all foreign country and operators, and to route calls according to state of carriers and said percentage allocations, and to provide three more alternative carriers along with the long distance carrier selected for each call.

### Detailed Description of Invention

GSM Traffic Management System provided to achieve objects of this invention is illustrated in the accompanying drawing, in which:

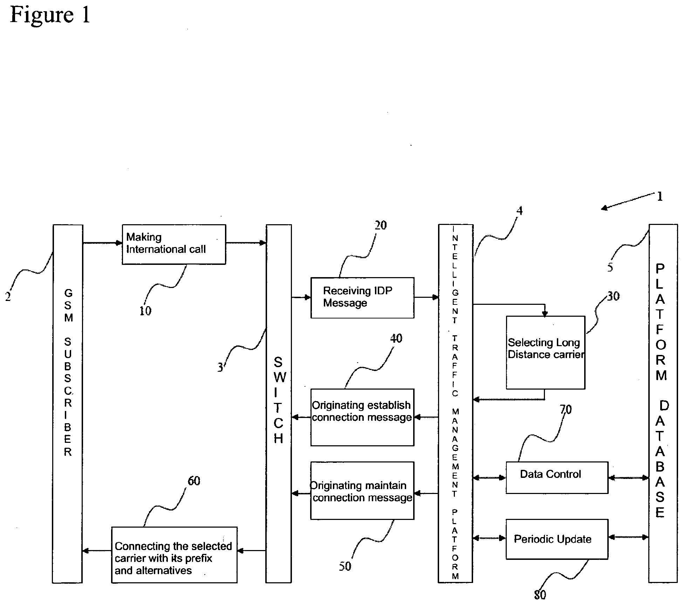

Figure 1 is a flow diagram of GSM Traffic Management System.

The parts and steps of the flowchart in the figure are each given reference numerals as follows:
1. GSM Traffic Management System
2. GSM Subscriber
3. Switch
4. Intelligent Traffic Management Platform (ITMP)
5. Platform database

10. Making international call
20. Originating initial detection point (IDP) message
30. Selecting long distance carriers
40. Originating establish connection message
50. Originating maintain connection message
60. Connecting the selected carrier with its prefix and alternatives
70. Data control
80. Periodical update

The system of invention relates to a telecommunication system including a platform enabling operators to establish call in a short time with high voice quality as well as at the best price for the operator for international calls through the long distance carriers, and to increase rate of establishing call by determining alternative carriers in case of facing problems with the selected carrier operator and using "Intelligent Network Application Protocol" (INAP) for these transactions. In this system, all international calls are collected in a single point, and call management is performed effectively with algorithm included and applied by the Intelligent Traffic Management Platform of the system.

Steps of GSM Traffic Management System (1) can be basically summarized as follows:
- **10. Making international call:** GSM Subscriber (2) calls another subscriber abroad. As soon as a call is made, signals are routed to the related switch (3).
- **20. Receiving initial detection point (IDP) message:** "Service Switch" and called number information are obtained from call information sent with IDP message from the switch (3) to Intelligent Traffic Management Platform (ITMP) (4). ITMP (4) gets the region information from which call is made from these parameters and information on the country to which call is made and the foreign operator from the called number.
- **30. Selecting long distance carriers:** A proper long distance carrier is determined.
- **40. Originating establish connection message:** "Establish connection" message is sent to the switch (3) from which call is originated by prefixing a series of number belonging to the carriers selected by ITMP (4) to the called number parameters.
- **50. Originating maintain connection message:** Call is transmitted without any change to the switch (3) if any carrier to foreign country and operator to which call is made between ITMP (4) is not selected.
- **60. Connection of the selected carrier with its prefix and alternatives:** Carrier options determined by ITMP (4) are used to be made a connection by the switch (3) and GSM subscriber (2) initiate to communication.
- **70. Data control:** ITMP (4) controls automatically whether there is any change in routing instructions on called foreign country and operator stored in platform (5) database. If there is a change in data (if there is a change in long distance traffic allocation percentages) all data in the database is downloaded by ITMP.
- **80. Periodical update:** In order to ensure not to create a difference between system and database, information in the database is downloaded periodically by the system, even though any change in routing instruction in database during data control is not occurred.

In the GSM Traffic Management System (1) of the invention, INAP protocol is used in routing calls to ITMP (4); therefore, only signaling data of call (calling, called number, location data) is carried, and any voice canal is not occupied. Thereby, the solution developed requires minimal traffic load over SS7 network.

In the GSM Traffic Management System (1) of the invention, user interfaces is designed to simplify making changes on the database (5) in the ITMP (4) for the operator. In this database (5), data determining traffic percentages as well as data including which carrier is available for which region and which carriers are to use preferably are stored. ITMP (4) is designed to control database (5) continually in order to convey changes made in database (5) immediately to network traffic.

When an international call is made (10), ITMP (4) receives an IDP message (20). ITMP (4) determines "Service Switch" and called number information from the incoming call information sent with IDP message. Location data from which call is made are obtained from these parameters and called country and foreign operator information from called number. A suitable operator serving as long distance carrier for the called foreign country and the operator and its alternatives included in the database (5) are selected by ITMP (4) (30). During this selection, regional allocation for voice traffic sent to carrier is performed while long distance carriers are determined. In all of the calls originating from domestic network, traffic routing is made in a predetermined rate for the long distance carriers with which operators have made an agreement, and availability of the long distance carrier to be selected in the location to which call is made is also taken into consideration. In case of any problem, alternative carriers are selected according to the criteria indicated by the operator and sent to the switch in first query. Besides, low cost and short connection time are also determining criteria. In the system, in addition to allocation of call in a rate determined according to cost criteria or agreements made by the operator, systems measuring voice quality can be integrated if required. Thereby, traffic rate in the carriers with bad voice quality from which problem alarm is received is automatically reduced to zero till problem is solved and subscribers are offered service with higher quality. Following determination of operator serving as long distance carrier, establish connection message is originated by ITMP (4) (40). Prefixing a series of number belonging to the carriers selected to the called number parameters by ITMP (4), "establish connection" message is sent to the switch (3) from which call is initiated. When any carrier is not selected to the called foreign country and operator between ITMP (4), maintain connection message is originated (50). In this case, call is transmitted to the switch (3) without any change. This transaction is performed to establish call via any carrier when a call made to an undefined foreign country and operator. Establish Connection (40) or Maintain Connection (50) message is originated for each call; these two steps are alternative to each other. In switch (3), step of connecting the selected carrier with its prefix and alternatives by ITMP (4) (60) is performed; thereby, GSM subscriber (2) initiates to communicate.

In GSM Traffic Management System (1) of the invention, data control step (70) is carried out periodically by ITMP (4) platform. System downloads all the data into its memory when there is a change in data in the database. ITMP (4) keeps a detailed record on each call routed and stores these records in the database (5). These records are the basis of the following assessments.

In the GSM Traffic Management System (1) of the invention, system database (5) is updated with new allocation percentages when price of long distance carriers changes or preferences of the operator on traffic routing change. During these updates, interfaces specially designed are used. ITMP (4) providing these interfaces enables to determine regional long distance carrier and to make regional differentiation in traffic allocation. Alternative carriers can be determined beforehand against facing any problem with the selected carrier by means of information obtained during data control (70). In the system, call can be allocated to the carriers in desired number, i.e. there is no limitation. The desired allocation can be performed for the whole network; traffic of regions is not allocated independent of each other and a priority level can be determined other than percentages determined for the carriers; thereby periodical update is performed (80).

## Claims

1. A GSM traffic management method comprising the steps of:
- Providing a switch (3) to which signals are routed;
- Providing an Intelligent Traffic Management Platform termed ITMP (4);
- Providing a platform database (5) configured to keep and store data determining traffic percentages, data including which carriers are available for which region and which carriers are used preferably, and detailed transaction records for each call routed by the IMTP (4);
- Providing voice quality measuring systems integrated in the ITMP (4);
Wherein the following steps are performed using SS7 network:
A. Making international call (10) by a GSM subscriber (2);
B. Receiving, by the ITMP (4), an initial detection point (IDP) message (20) from the switch (3);
C. Determining, by the ITMP (4), a Service Switch and called number information from the incoming call information sent with IDP message;
D. Selecting (30), by the ITMP (4), long distance carrier (30), wherein:
∘ Regional allocation for voice traffic sent to carrier is performed while long distance carriers are determined;
∘ in all of the calls originating from domestic network, traffic routing is made in a predetermined rate for the long distance carriers with which operators have made an agreement;
∘ In case of any problem, alternative carriers are selected according to the criteria indicated by the operator and sent to the switch (3);
∘ Allocation of call is made in a rate determined according to cost criteria or agreements made by the operator, as well as on the basis of call voice quality as measured by the voice quality measuring systems, by automatically reducing to zero traffic rate in the carriers with bad voice quality from which problem alarm is received, till problem is solved and GSM subscriber (2) is offered higher voice quality service;
E. Originating (40), by the ITMP (4), an establish connection message, by prefixing a series of number belonging to the carriers selected by the ITMP (4) to the called number parameters, and sending the establish connection message to the switch (3) from which call is originated;
F. Originating (50) a maintain connection message by the ITMP (4) and transmitting call without any change to the switch (3), if in step D any carrier is not selected to the called foreign country and operator between the ITMP (4);
G. Initiating call, by the switch (3), on the basis of step E or F;
H. Connecting (60), by the switch (3), the selected carrier with its prefix, thereby GSM subscriber (2) initiates to communicate;
Wherein:
- the IMTP (4) continuously performs a step I, hereafter referred to as data control, of controlling (70) automatically whether there is any change in routing instructions on called foreign country and operator stored in the platform database (5) and, if there is a change in data, downloads all data in the platform database (5);
- INAP protocol is used in routing calls to ITMP (4), whereby only signaling data of call, comprising calling, called number, location data, is carried, and any voice canal is not occupied; and
- Information in the database is downloaded periodically (80), even though any change in routing instruction in database during data control is not occurred.

2. Method according to claim 1, wherein the IMTP (4) sends to the switch (3) a first preference and three different alternatives for the long distance carrier according to criteria determined by the operator.

3. Method according to claim 1 or 2, wherein the ITMP (4) which provides interfaces designed in such way to enable to determine regional long distance carrier, to determine a prior preference other than regional differentiation in traffic allocation, regional percentages for the carriers and the percentage assigned according to criteria set for the carriers.

4. Method according to any claim 1-3, wherein the IMTP (4) enables allocation of call without any limitation to the carriers in desired number within the system.

5. A GSM traffic management system (1) for use with a GSM traffic management method according to any claim 1-4 comprising:
- A switch (3) configured to receive signals routed thereto;
- An Intelligent Traffic Management Platform termed ITMP (4) ;
- A platform database (5); and
- Voice quality measuring systems integrated in the ITMP (4);
Wherein the IMTP (4) is configured to perform steps B-E, I of claim 1, and the switch (3) is configured to perform steps H and G of claim 1.

## Patentansprüche

1. GSM-Verkehrsverwaltungsverfahren, das die folgenden Schritte umfasst:
- Zur Verfügung Stellen eines Schalters (3), an den Signale geroutet werden;
- Zur Verfügung Stellen einer als ITMP (Intelligent Traffic Management Platform) bezeichneten intelligenten Verkehrsverwaltungsplattform (4);
- Zur Verfügung Stellen einer Plattformdatenbank (5), die konfiguriert ist zum Aufbewahren und Speichern von Daten, die Verkehrsprozente ermitteln, Daten die anzeigen, welche Netzbetreiber für welche Region zur Verfügung stehen und welche Netzbetreiber vorzugsweise verwendet werden, sowie von detaillierten Vorgangssaufzeichnungen für jeden durch die ITMP (4) gerouteten Anruf;
- Zur Verfügung Stellen von in die ITMP (4) integrierten Systemen zur Messung der Sprachqualität;
wobei die folgenden Schritte mit einem SS7-Netz durchgeführt werden:
A. Tätigen eines internationalen Anrufs (10) durch einen GSM-Teilnehmer (2);
B. Empfangen, durch die ITMP (4), einer von dem Schalter (3) stammenden Meldung (20) über den ersten Erkennungspunkt (Initial Detection Point (IDP) -Meldung);
C. Ermitteln, durch die ITMP (4), eines Serviceschalters und von Informationen über die angerufene Nummer aus den mit der IDP-Meldung mitgesendeten Informationen über den eingehenden Anruf;
D. Auswählen (30), durch die ITMP (4), eines Langstrecken-Netzbetreibers (30), wobei:
∘ die regionale Zuteilung für den an den Netzbetreiber gesendeten Sprachverkehr durchgeführt wird, während Langstrecken-Netzbetreiber ermittelt werden;
∘ bei allen von einem inländischen Netz stammenden Anrufen ein Verkehrsrouting in einer vorbestimmten Rate durchgeführt wird für die Langstrecken-Netzbetreiber, mit denen die Betreiber eine Vereinbarung getroffen haben;
∘ im Falle eines Problems alternative Netzbetreiber gemäß den vom Betreiber angegebenen Kriterien ausgewählt und an den Schalter (3) gesendet werden;
∘ die Anrufzuweisung in einer Rate erfolgt, die nach Kostenkriterien oder Vereinbarungen des Betreibers bestimmt wird, sowie auf der Basis der von den Systemen zur Messung der Sprachqualität gemessenen Sprachqualität des Anrufs, durch automatisches Reduzieren der Verkehrsrate des Netzbetreibers mit schlechter Sprachqualität, von dem ein Problemalarm empfangen wird, auf Null, bis das Problem gelöst ist und dem GSM-Teilnehmer (2) ein Service mit höherer Sprachqualität angeboten wird;
E. Ausgeben (40), durch die ITMP (4), einer Meldung über den Verbindungsaufbau durch Voranstellen einer Reihe von Nummern, die zu den von der ITMP (4) ausgewählten Netzbetreibern gehören, vor die Parameter der angerufenen Nummer, und Senden der Meldung über den Verbindungsaufbau an den Schalter (3), von dem der Anruf stammt;
F. Ausgeben (50) einer Meldung über die Aufrechterhaltung der Verbindung durch die ITMP (4) und Übertragen des Anrufs ohne Änderung an den Schalter (3), wenn in Schritt D kein Netzbetreiber für das angerufene Ausland und für den Betreiber zwischen der ITMP (4) ausgewählt wird;
G. Einleiten eines Anrufs, durch den Schalter (3), auf der Basis von Schritt E oder F;
H. Verbinden (60), durch den Schalter (3), des ausgewählten Netzbetreibers mit seiner Voranstellung, wodurch die Kommunikation des GSM-Teilnehmers (2) eingeleitet wird;
wobei:
- die ITMP (4) durchgehend einen Schritt I durchführt, im Folgenden als Datensteuerung bezeichnet, zur automatischen Steuerung (70), ob eine Änderung bei den in der Plattformdatenbank (5) gespeicherten Routinganweisungen für das angerufene Ausland und für den Betreiber vorliegt, und falls eine Änderung bei den Daten vorliegt, lädt die ITMP alle Daten in die Plattformdatenbank (5) herunter;
- das INAP-Protokoll verwendet wird zum Routen von Anrufen an die ITMP (4), wodurch nur Signalisierungsdaten eines Anrufs umfassend Daten über den Anruf, die angerufene Nummer und den Standort übertragen werden, und kein Sprachkanal belegt ist; und
- Informationen in der Datenbank periodisch (80) heruntergeladen werden, obwohl keine Änderung in der Routinganweisung in der Datenbank während der Datensteuerung aufgetreten ist.

2. Verfahren gemäß Anspruch 1, wobei die ITMP (4) eine erste Präferenz und drei verschiedene Alternativen für den Langstrecken-Netzbetreiber gemäß den durch den Betreiber bestimmten Kriterien an den Schalter (3) sendet.

3. Verfahren gemäß Anspruch 1 oder 2, wobei die ITMP (4) Schnittstellen zur Verfügung stellt, die es ermöglichen, regionale Langstrecken-Netzbetreiber zu bestimmen, eine frühere Präferenz, bei der es sich um eine andere als die regionale Differenzierung bei der Verkehrszuteilung zu bestimmen, regionale Prozentsätze für die Netzbetreiber zu bestimmen und den Prozentsatz nach den für die Netzbetreiber festgelegten Kriterien festzulegen.

4. Verfahren gemäß einem der Ansprüche 1 bis 3, wobei die ITMP (4) ermöglicht, Anrufe zuzuweisen ohne Beschränkung auf die Netzbetreiber in der gewünschten Anzahl innerhalb des Systems.

5. GSM-Verkehrsverwaltungssystem (1) zur Verwendung mit einem GSM-Verkehrsverwaltungsverfahren gemäß einem der Ansprüche 1 bis 4, wobei das System umfasst:
- einen Schalter (3), der dazu konfiguriert ist, dorthin geroutete Signale zu empfangen;
- eine als ITMP (Intelligent Traffic Management Platform) bezeichnete, intelligente Verkehrsverwaltungsplattform (4) ;
- eine Plattformdatenbank (5); und
- in die ITMP (4) integrierte Systeme zur Messung der Sprachqualität;
wobei die ITMP (4) dazu konfiguriert ist, die Schritte B bis E gemäß Anspruch 1 durchzuführen, und der Schalter (3) dazu konfiguriert ist, die Schritte H und G gemäß Anspruch 1 durchzuführen.

## Revendications

1. Procédé de gestion de trafic GSM comprenant les étapes suivantes :
- la fourniture d'un commutateur (3) sur lequel des signaux sont acheminés ;
- la fourniture d'une plate-forme de gestion de trafic intelligente dénommée ITMP (4) ;
- la fourniture d'une base de données de plate-forme (5) configurée pour maintenir et stocker des données déterminant des pourcentages de trafic, des données comprenant quels opérateurs téléphoniques sont disponibles pour quelle région et quels opérateurs téléphoniques sont utilisés de préférence, et des enregistrements de transaction détaillés pour chaque appel acheminé par l'ITMP (4) ;
- la fourniture de systèmes de mesure de qualité vocale intégrés dans l'ITMP (4) ;
dans lequel les étapes suivantes sont effectuées en utilisant un réseau SS7 :
A. l'exécution d'un appel international (10) par un abonné GSM (2) ;
B. la réception, par l'ITMP (4), d'un message (IDP) de point de détection initial (20) provenant du commutateur (3) ;
C. la détermination, par l'ITMP (4), d'un commutateur de service et d'informations de numéro appelé à partir des informations d'appel entrant envoyées avec le message IDP ;
D. la sélection (30), par l'ITMP (4), d'un opérateur téléphonique longue distance (30), dans lequel :
- une allocation régionale pour un trafic vocal envoyé sur un opérateur téléphonique est effectuée alors que des opérateurs téléphoniques longue distance sont déterminés ;
- dans la totalité des appels provenant d'un réseau intérieur, un routage de trafic est effectué à un débit prédéterminé pour les opérateurs téléphoniques longue distance avec lesquels des opérateurs ont conclu un accord ;
- dans le cas d'un quelconque problème, des opérateurs téléphoniques alternatifs sont sélectionnés en fonction des critères indiqués par l'opérateur et envoyés au commutateur (3) ;
- une allocation d'appel est effectuée à un débit déterminé en fonction de critères de coût ou d'accords conclus par l'opérateur, ainsi que sur la base d'une qualité vocale d'appel telle que mesurée par les systèmes de mesure de qualité vocale, en réduisant automatiquement à un débit de trafic nul pour les opérateurs téléphoniques avec une mauvaise qualité vocale à partir desquelles une alarme de problème est reçue, jusqu'à ce que le problème soit résolu et qu'un service de qualité vocale supérieure soit offert à l'abonné GSM (2) ;
E. l'émission (40), par l'ITMP (4), d'un message de connexion d'établissement, en préfixant une série de numéros appartenant aux opérateurs téléphoniques sélectionnés par l'ITMP (4) pour les paramètres de numéro appelé, et l'envoi du message de connexion d'établissement au commutateur (3) d'où un appel provient ;
F. l'émission (50) d'un message de connexion de maintien par l'ITMP (4) et la transmission d'un appel sans aucun changement au commutateur (3), si, dans l'étape D, n'importe quel opérateur téléphonique n'est pas sélectionné pour l'opérateur et le pays étranger appelé entre l'ITMP (4) ;
G. le lancement d'un appel, par le commutateur (3), sur la base de l'étape E ou F ;
H. la connexion (60), par le commutateur (3), de l'opérateur téléphonique sélectionné avec son préfixe, moyennant quoi un abonné GSM (2) commence à communiquer ;
dans lequel :
- l'ITMP (4) effectue de manière continue une étape I, ci-après indiquée comme une commande de données, pour commander (70) automatiquement le fait qu'il existe un quelconque changement dans des instructions de routage sur un opérateur et un pays étranger appelé, stockées dans la base de données de plate-forme (5), et s'il existe un changement dans les données, télécharger toutes les données dans la base de données de plate-forme (5) ;
- un protocole INAP est utilisé pour acheminer des appels vers l'ITMP (4), moyennant quoi seules des données de signalisation d'appel, comprenant des données de numéro d'appelant, de numéro appelé, de localisation, sont transportées, et aucun canal vocal n'est occupé ; et
- des informations dans la base de données sont téléchargées périodiquement (80), même si aucun changement d'instruction de routage ne s'est produit dans la base de données durant la commande de données.

2. Procédé selon la revendication 1, dans lequel l'ITMP (4) envoie au commutateur (3) une première préférence et trois alternatives différentes pour l'opérateur téléphonique longue distance en fonction de critères déterminés par l'opérateur.

3. Procédé selon la revendication 1 ou 2, dans lequel l'ITMP (4) qui fournit des interfaces conçues de manière à permettre de déterminer un opérateur téléphonique longue distance régional, pour déterminer une préférence préalable autre qu'une différenciation régionale dans l'allocation de trafic, des pourcentages régionaux pour les opérateurs téléphoniques et les pourcentages attribués en fonction d'un ensemble de critères pour les opérateurs téléphoniques.

4. Procédé selon l'une quelconque des revendications 1 à 3, dans lequel l'ITMP (4) permet l'allocation d'un appel sans aucune limitation aux opérateurs téléphoniques pour un numéro désiré dans le système.

5. Système de gestion de trafic GSM (1) pour l'utilisation avec un procédé de gestion de trafic GSM selon l'une quelconque des revendications 1 à 4, comprenant :
- un commutateur (3) configuré pour recevoir des signaux acheminés vers celui-ci ;
- une plate-forme de gestion de trafic intelligente dénommée ITMP (4) ;
- une base de données de plate-forme (5) ; et
- des systèmes de mesure de qualité vocale intégrés dans l'ITMP (4) ;
dans lequel l'ITMP (4) est configuré pour effectuer les étapes B à E et I de la revendication 1 et le commutateur (3) est configuré pour effectuer les étapes H et G de la revendication 1.
